Europäisches Patentamt

European Patent Office

Office européen des brevets

(11) Veröffentlichungsnummer: **0 399 304**

**A1**

## (12) EUROPÄISCHE PATENTANMELDUNG

(21) Anmeldenummer: **90108852.6**

(22) Anmeldetag: **11.05.90**

(51) Int. Cl.5: **B65B 13/10**

(30) Priorität: **20.05.89 DE 8906233 U**

(43) Veröffentlichungstag der Anmeldung:
**28.11.90 Patentblatt 90/48**

(84) Benannte Vertragsstaaten:
**DE FR GB IT**

(71) Anmelder: **Maschinenfabrik Gerd Mosca GmbH**
**Bahnhofstrasse 8**
**D-6931 Zwingenberg(DE)**

(72) Erfinder: **Der Erfinder hat auf seine Nennung verzichtet**

(74) Vertreter: **Freischem, Werner, Dipl.-Ing. et al**
**Patentanwälte Dipl.-Ing. W. Freischem**
**Dipl.-Ing. I. Freischem An Gross St. Martin 2**
**D-5000 Köln 1(DE)**

(54) **Maschine zum Umschnüren von Packgut.**

(57) Maschine zum Umschnüren von Packgut (9), insbesondere Lebensmittel wie Rollbraten, Rollschinken oder dergleichen, mit einem aus einem Vortisch (2) und einem Rücktisch (3) sich zusammensetzenden Packguttisch, einer Umschnürungsvorrichtung (19), welche das Packgut in einer zwischen dem Vortisch (2) und dem Rücktisch (3) befindlichen Umschnürungsebene (4) mit einer Schnur (11) umschlingt, die sie von einem Vorratswickel (18) abzieht, und einem unterhalb des Packguttisches befindlichen Knoteraggregat (5), welches den Anfang (13) der Schlinge (12) festhält, und das Schlingenende (14) mit dem Schlingenanfang (13) verknotet und die verknotete Schlinge (12) von der Schnur (11) abschneidet.

Damit das Packgut (9) durch die Machine hindurch befördert werden kann und um einen sehr großen Schnurvorrat unterbringen zu können, ist der Rücktisch (3) als im wesentlichen zylindrische Trommel ausgebildet, um welche die Umschnürungsvorrichtung (19) und eine den Schnurvorrat (18) aufnehmende Ringspule (10) drehbar und antreibbar gelagert sind.

*F I G. 1*

## Maschine zum Umschnüren von Packgut

Die Erfindung bezieht sich auf eine Maschine zum Umschnüren von Packgut, insbesondere Lebensmittel, wie Rollbraten, Rollschinken oder dergleichen, mit einem aus einem Vortisch und einem Rücktisch sich zusammensetzenden Packguttisch, einer Umschnürungsvorrichtung, welche das Packgut in einer zwischen dem Vortisch und dem Rücktisch befindlichen Umschnürungsebene mit einer Schnur umschlingt, die sie von einem Vorratswickel abzieht und einem unterhalb des Packguttisches befindlichen Konteraggregat, welches den Anfang der Schlinge festhält und das Schlingenende mit dem Schlingenanfang verknotet und die verknotete Schlinge von der Schnur abschneidet.

Umschnürungsmaschinen dieser Art sind bekannt. Bei einer Art von Umschnürungsmaschinen wird die Schnur durch die Drehachse eines die Schnur um das Packstück schlingenden Schnürarmes zugeführt. Bei diesen Maschinen kann das Packgut nur von einer Seite zugeführt und wieder abgeführt werden, weil hinter dem Rücktisch der Schnurarm mit seinem Antrieb angeordnet ist. Bei diesen Umschnürungsmaschinen wird die Schnur von einem Vorratswickel abgezogen, der sich außerhalb der Umschnürungsmaschine befindet. Zum Umwickeln von Lebensmitteln, insbesondere Fleisch, sind derartige Umschnürungsmaschinen ungeeignet, weil sie nur mit großen Schwierigkeiten den .hygienischen Erfordernissen bei der Fleischverarbeitung angepaßt werden kann und der Schnurvorratswickel sich außerhalb der Umschnürungsmaschine befindet oder aber nur relativ klein sein kann, wenn er innerhalb der Maschine untergebracht werden soll.

Bei einer anderen Art von Umschnürungsmaschinen, den sogenannten Tunnelmaschinen, wird der Schnur-Vorratswickel um das Packgut herumgeführt. Diese Maschinen haben zwar den Vorteil, daß das Packgut auf einer Seite zugeführt und auf der anderen Seite wieder abgenommen werden kann, nachteilig ist aber hier, daß die um das Packgut herumzuführende Schnur-Vorratsrolle nur relativ klein sein kann, weil sonst zu große Unwuchten entstehen. Auch hier ist die Maschine nur mit großem Aufwand so abzukapseln, daß sie den hygienischen Erfordernissen der Fleischverarbeitung genügen.

Der Erfindung liegt die Aufgabe zugrunde, eine Umschnürungsmaschine zu schaffen, bei der das Packgut ebenso wie bei einer Tunnelmaschine von einer Seite zugeführt und von der anderen Seite abgenommen werden kann und die den Vorteil hat, daß sehr große Schnur-Vorratswickel Anwendung finden können. Ferner soll die neue Maschine sehr gut abkapselbar sein, so daß die mit Fleisch in Berührung kommenden Teile mit heißem Wasser abgespritzt werden können.

Diese Aufgabe wird erfindungsgemäß dadurch gelöst, daß der Rücktisch als im wesentlichen zylindrische Trommel ausgebildet ist, um welche die Umschnürungsvorrichtung und eine den Schnurvorrat aufnehmende Ringspule drehbar und antreibbar gelagert sind. Da der Durchmesser der Ringspule sehr groß ist, kann auch der darauf gewickelte Schnurvorrat sehr groß sein. Da dieser Schnurvorrat lediglich um seine Achse rotiert, treten bei dieser Maschine keine größere Unwuchten auf.

Bei einer bevorzugten Ausführungsform dieser Maschine weist die Umschnürungsvorrichtung ein Schnurmagazin auf, dessen Schnurvorrat etwa dem Umfang der Trommel entspricht, und die Umschnürungsvorrichtung ist während des Umschnürungsvorganges starr mit der koaxialen Ringspule kuppelbar. Diese Ausführungsform hat den Vorteil, daß während der Umschnürung von der Ringspule keine Schnur abgezogen wird, sondern die zur Bildung der Schlinge erforderliche Schnur nur aus dem Schnurmagazin genommen wird, das während der Umschnürung seine Lage gegenüber der Ringspule nicht verändert. Nach dem Umschnürungsvorgang kann dann die starre Kupplung zwischen Ringspule und Umschnürungsvorrichtung gelöst werden, so daß während der Knotenbildung und dem Abtrennen der verknoteten Schlinge das Schnurmagazin wieder aufgefüllt werden kann. Damit dieses Auffüllen schnell geschehen kann, ist die Ringspule entgegen der Drehrichtung der Umschnürungsvorrichtung antreibbar.

Weitere Merkmale der Erfindung ergeben sich aus den Unteransprüchen.

In der folgenden Beschreibung werden Ausführungsbeispiele der Erfindung unter Bezugnahme auf die Zeichnungen näher erläutert. Die Zeichnungen zeigen in

Fig. 1 eine Frontansicht der Umschnürungsmaschine bei abgenommener Abdeckung und Ausgangsstellung der Umschnürungsvorrichtung,

Fig. 2 eine Ansicht nach der Schnittlinie II-II in Fig. 1,

Fig. 3 eine Frontansicht der Umschnürungsmaschine gemäß Fig. 1, bei welcher die Umschnürungsvorrichtung eine Schlinge um das Packgut bildet,

Fig. 4 teilweise eine Draufsicht und teilweise eine Schnittansicht einer abgewandelten Ausführungsform einer Umschnürungsmaschine nach der Erfindung.

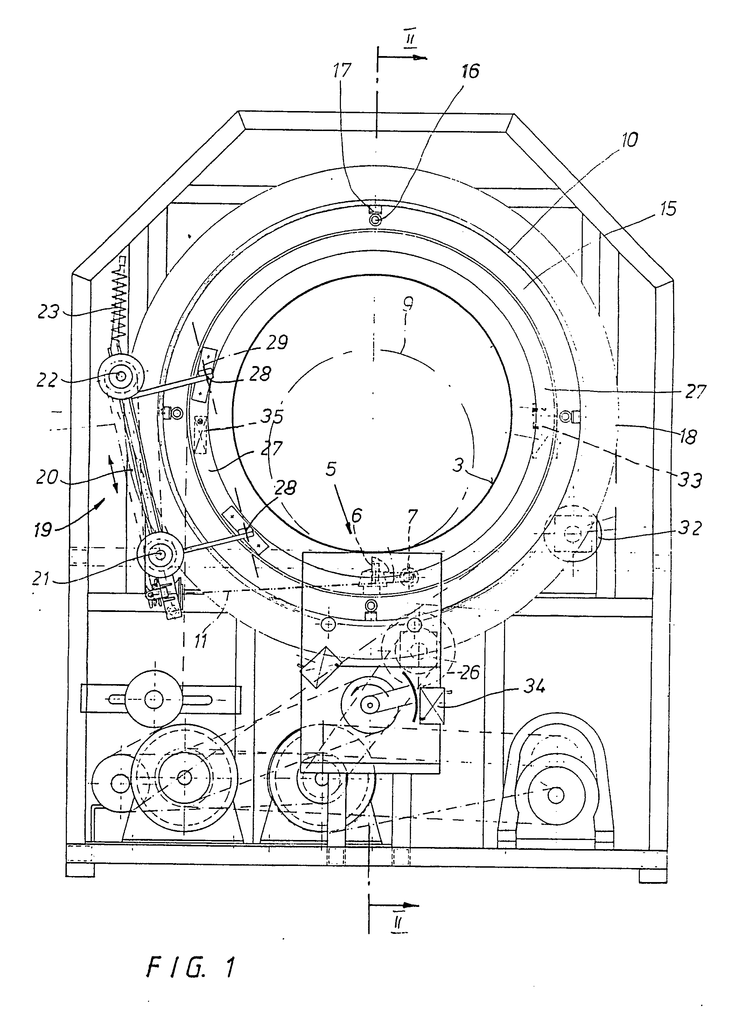

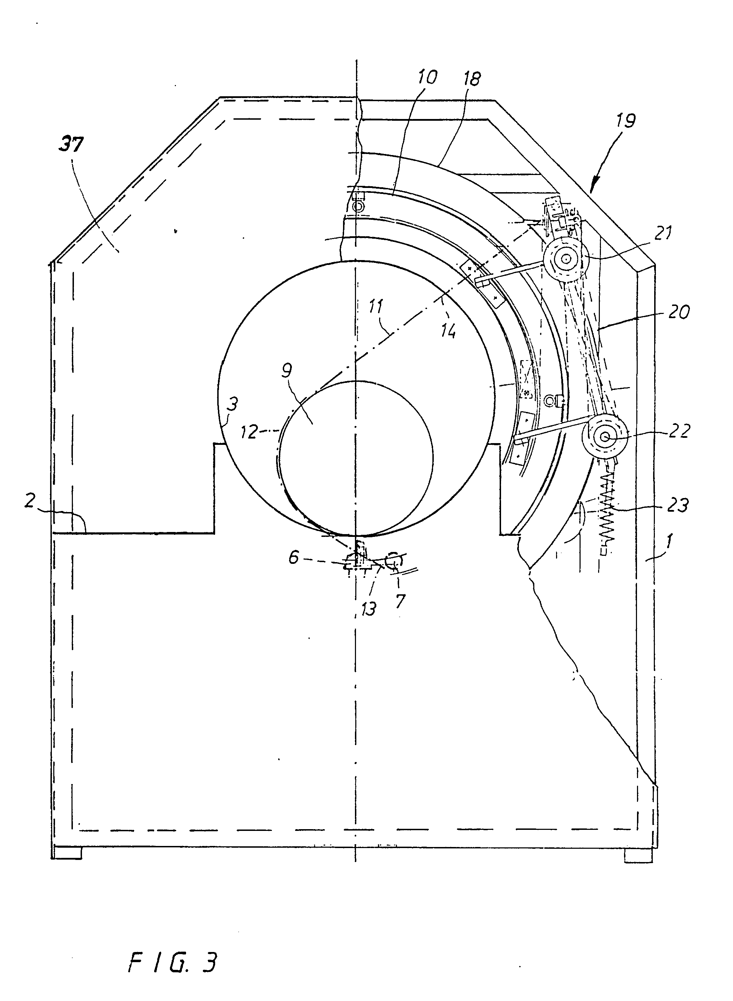

Die Umschnürungsmaschine nach den Fig. 1 bis 3 weist ein Maschinengestell 1 auf, das vor der Umschnürungsebene 4 einen Vortisch 2 bildet und das hinter dieser Umschnürungsebene 4 einen als Trommel ausgebildeten Rücktisch 3 trägt.

Unterhalb des Vortisches 2 ist ein Knoteraggregat 5 angeordnet mit Knoterschnabel 6 und Klemmkopf 7. Die übrigen bei einem Knoteraggregat notwendigen Teile, wie Einwerfer, Schnurheber, Abstreifer und Trennmesser sind nicht dargestellt.

Die Fig. 1 zeigt die Umschnürungsmaschine in ihrer Ausgangsstellung. Die Umschnürungsvorrichtung 19 ist zusammen mit der Ringspule 10, welche den Schnur-Vorratswickel 18 aufnimmt, um die Achse der Trommel 8 drehbar. Die Umschnürungsvorrichtung 19 weist ein Schnurmagazin 20 auf mit zwei zueinander parallelen Rollensätzen 21 und 22, deren Abstand voneinander gegen die Wirkung einer Rückstellfeder 23 veränderbar ist. Der über die Rollen der Rollensätze 21 und 22 geführte Schnurvorrat entspricht etwa dem Umfang der Trommel 3. Das bedeutet, daß bei einem Umschnürungsvorgang der im Schnurmagazin 20 gehaltene Schnurvorgang immer ausreicht, um das größtmögliche Packgut zu umschnüren. Während des Umschnürungsvorganges ist die Ringspule 10 starr mit der Umschnürungsvorrichtung 19 verbunden. Nach Beendigung der Umschnürung und wenn die Umschnürungsvorrichtung 19 die in Fig. 1 dargestellte Ausgangsposition erreicht hat, wird die Kupplung zwischen Ringspule 10 und der Umschnürungsvorrichtung 19 gelöst, so daß die Rückstellfeder 23 durch Hochziehen des oberen Rollensatzes 22 Schnur 11 von der Ringspule 10 abzieht und somit das Schnurmagazin 20 wieder auffüllt. Damit dieses Auffüllen sehr schnell geschehen kann, ist die Ringspule 10, die von einem Spulenträgerring 15 über Tragzapfen 16 und Blattfedern 17 getragen wird, über ein Antriebsritzel 26 antreibbar, und zwar entgegen der Drehrichtung der Umschnürungsvorrichtung 19.

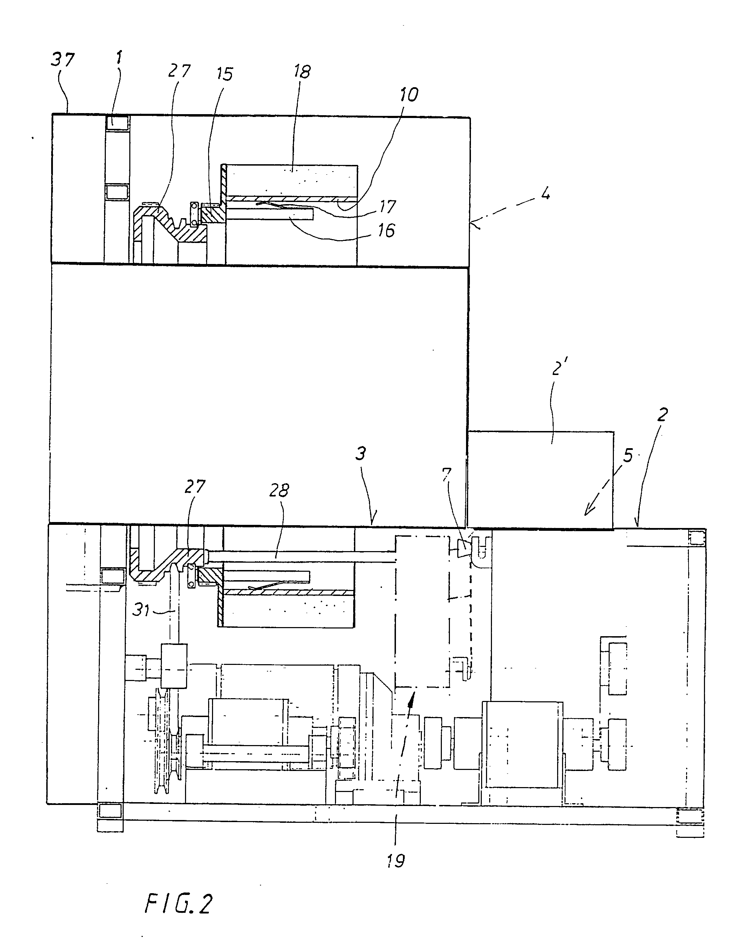

Das Schnurmagazin 20 ist über Magazinhalter 28 mit einem Magazinträgerring 27 verbunden. Wie die Fig. 2 zeigt, erstrecken sich die Magazinhalter 28 durch das Innere der Ringspule 10.

Der Magazinträgerring 27 ist mit dem Spulenträgerring 15 über ein Planetentrieb 32 und eine Magnetkupplung 36 kuppelbar. Während des Umschnürungsvorganges bilden der Magazinträgerring 27 und der Spulenträgerring 15 eine in sich starre Einheit, die über den Keilriemen 31 im Umschnürungsrichtung angetrieben wird, bis ein Schalter 33 meldet, daß der Umschnürungsvorgang beendet ist. Dieser Schalter 33 setzt das Knoteraggregat 5 in Gang. Nach einer halben Drehung des Knoteraggregates 5 wird durch einen Schaltnocken ein Schalter betätigt, der die starre Kupplung zwischen Spulenträgerring 15 und Magazinträgerring 27 löst und den Antrieb für den Spulenträgerring 15 einschaltet, so daß die Rückstellfeder 23 den ursprünglichen Abstand der Rollensätze 21 und 22 wieder herstellt und den Vorrat im Schnurmagazin 20 wieder auffüllt. Über einen Taster wird die ausreichende Auffüllung gemeldet, so daß die Magnetkupplung 36 den Planetentrieb 32 starr kuppelt, wodurch die Einheit zwischen Spulenträgerring 15 und Magazinträgerring 27 wieder hergestellt ist und ein neuer Umschnürungsvorgang, beispielsweise über einen Fußschalter, ausgelöst werden kann.

Wie die Fig. 1 zeigt, ist das Schnurmagazin 20 über Magazinhalter 28 mit dem Magazinträgerring 27 verbunden. Damit die Ringspule 10 vom Vortisch 2 her ausgewechselt werden kann, kann das Schnurmagazin 20 um die Achse 29 nach vorne und nach innen geschwenkt werden, so daß dann die Ringspule 10 von den Tragzapfen 16 und den Blattfedern 17 abgezogen werden kann. Durch einfaches Aufschieben einer neuen Ringspule 10 mit Vorratswickel 18 wird der Schnurvorrat erneuert.

Der Vortisch 2 weist eine Mulde 2' auf, deren Wölbung der Wölbung der Trommel 3 angepaßt ist. Diese Mulde 2' besteht ebenso wie die Trommel 3 und der Vortisch 2 aus Edelstahl. Auch die Haube 37, welche das Maschinengestell 1 und den Raum um die Trommel 3 umgibt, kann aus nichtrostendem Stahl oder aber auch aus einem hochwertigen Kunststoff bestehen.

Bei der Umschnürungsmaschine nach den Fig. 1 bis 3 kann die Ringspule 10 mit Vorratswickel 18 von der Vorderseite der Maschine aus gewechselt werden. Dazu ist nicht nur das Schnurmagazin nach vorne klappbar, sondern auch die Trommel 3 zurückschiebbar.

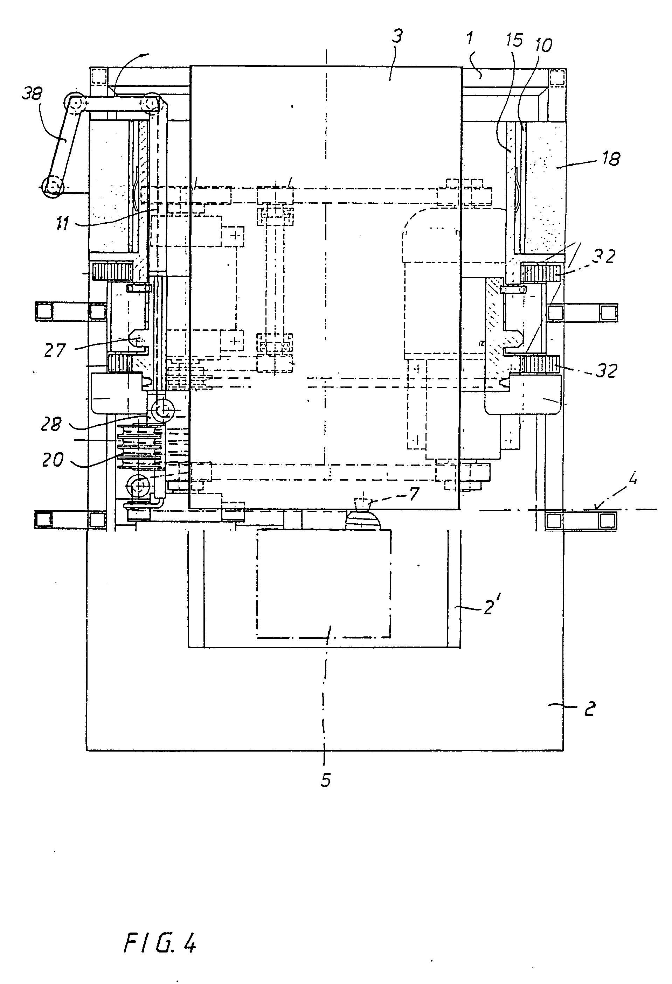

Bei der Ausführungsform nach Fig. 4 ist die Ringspule 10 mit Vorratswickel 18 von hinten auf den Spulenträger 15 aufschiebbar. Bei dieser Ausführungsform ist ein Schnurabnehmer 38 vorgesehen, der zum Abziehen der Ringspule 10 nach hinten geklappt werden kann. Bei dieser Ausführungsform kann die Trommel 3 starr mit dem Maschinengestell 1 verbunden werden. Bei dieser Ausführungsform wird die Schnur 11 vom Schnurabnehmer 38 durch den Magazinträgerring 27 hindurch zum Schnurmagazin 20 geführt. Das Schnurmagazin 20 ist über relativ kurze Magazinhalter 28 mit dem Magazinträgerring 27 verbunden.

Die Maschine nach der Erfindung kann mit einer das Packgut taktweise vorschiebenden Fördereinrichtung versehen werden, welche nach jedem Vorschub um beispielsweise 20 mm einen Umschnürungsvorgang auslöst.

Bezugszeichenliste

1 Maschinengestell
2 Vortisch
2' Vortischmulde
3 Rücktisch, Trommel

4 Umschnürungsebene
5 Knoteraggregat
6 Knoterschnabel
7 Klemmkopf
9 Packgut
10 Ringspule
11 Schnur
12 Schlinge
13 Schlingenanfang
14 Schlingenende
15 Spulenträgerring
16 Tragzapfen
17 Blattfeder
18 Vorratswickel
19 Umschnürungsvorrichtung
20 Schnurmagazin
21 unterer Rollensatz
22 oberer Rollensatz
23 Rückstellfeder
24 Magazintaster
26 Antrieb für Spulenträger
27 Magazinträgerring
28 Magazinhalter
30 Antriebsmotor
31 Keilriemen
32 Planetentrieb
33 Schalter für Umsschnürungsvorrichtung 19
34 Schalter für Knoteraggregat 5
35 Schalter für Schnurmagazin 20
36 Magnetkupplung
37 Haube
38 Schnurabnehmer

**Ansprüche**

1. Maschine zum Umschnüren von Packgut (9), insbesondere Lebensmittel wie Rollbraten, Rollschinken oder dergleichen, mit einem aus einem Vortisch (2) und einem Rücktisch (3) sich zusammensetzenden Packguttisch einer Umschnürungsvorrichtung (19), welche das Packgut in einer zwischen dem Vortisch (2) und dem Rücktisch (3) befindlichen Umschnürungsebene (4) mit einer Schnur (11) umschlingt, die sie von einem Vorratswickel (18) abzieht, und einem unterhalb des Packguttisches befindlichen Knoteraggregat (5), welches den Anfang (13) der Schlinge (12) festhält, und das Schlingenende (14) mit dem Schlingenanfang (13) verknotet und die verknotete Schlinge (12) von der Schnur (11) abschneidet, dadurch gekennzeichnet, daß der Rücktisch (3) als im wesentlichen zylindrische Trommel ausgebildet ist, um welche die Umschnürungsvorrichtung (19) und eine den Schnurvorrat (18) aufnehmende Ringspule (10) drehbar und antreibbar gelagert sind.

2. Maschine nach Anspruch 1, dadurch gekennzeichnet, daß der Vortisch (2) zumindest teilweise als Mulde (2′) ausgebildet ist, deren Wölbung der Wölbung der Trommel (3) entspricht.

3. Maschine nach Anspruch 1 oder 2, dadurch gekennzeichnet, daß die Umschnürungsvorrichtung (19) ein Schnurmagazin (20) aufweist, dessen Schnurvorrat etwa dem Umfang der Trommel (3) entspricht und die Umschnürungsvorrichtung (19) während des Umschnürungsvorganges starr mit der koaxialen Ringspule (10) kuppelbar ist.

4. Maschine nach Anspruch 3, dadurch gekennzeichnet, daß das Schnurmagazin (20) zwei zueinander parallele Rollensätze (21,22) aufweist, deren Abstand voneinander gegen die Wirkung einer Rückstellfeder (23) veränderbar ist.

5. Maschine nach Anspruch 3 oder 4, dadurch gekennzeichnet, daß zum Auffüllen des Schnurmagazins (20) die Ringspule (10) entgegen der Drehrichtung der Umschnürungsvorrichtung (19) antreibbar ist.

6. Maschine nach einem der Ansprüche 1 bis 5, gekennzeichnet durch einen die Ausgangsstellung der Umschnürungsvorrichtung (19) überwachenden Schalter (33), einen die Ausgangsstellung des Knoteraggregates (5) überwachenden Schalter (34) und einen von diesen Schaltern (33,34) abhängigen und die Füllung des Schnurmagazins (20) überwachenden und steuernden Schalter (35).

7. Maschine nach einem der Ansprüche 1 bis 6, dadurch gekennzeichnet, daß das Schnurmagazin (20) über Magazinhalter (28) mit einem Magazinträgerring (27) verbunden ist, der vom Vortisch (2,2′) aus gesehen hinter der Ringspule (10) angeordnet ist und daß zum Auswechseln der Ringspule (10) das Schnurmagazin (20) um die Achse (29) nach vorn zum Vortisch (2) in den Innenradius der Ringspule (10) hin klappbar und die Trommel (3) vom Vortisch (2) weg nach hinten schiebbar am Maschinengestell befestigt ist.

8. Maschine nach einem der Ansprüche 3 bis 7, gekennzeichnet durhc einen in Ausgangsstellung der Umschnürungsvorrichtung (11) den Abstand zwischen den Rollensätzen (21,22) feststellenden Taster) der einen Schalter betätigt, welcher die Kupplung zwischen Ringspule (10) und Umschnürungsvorrichtung (19,20-23, 27,29) freigibt und den Antrieb (26) für die Ringspule (10) einschaltet, bis der ursprüngliche, dem gefüllten Magazin (20) entsprechende Abstand wieder hergestellt ist.

9. Maschine nach einem der Ansprüche 1 bis 6 und 8, dadurch gekennzeichnet, daß die Trommel (3) starr mit dem Maschinengestell verbunden ist und,vom Vortisch (2) aus gesehen, der Spulenträgerring (15) hinter dem Magazinträgerring (27) angeordnet und die Ringspule (10) bei abgenommener Haube (37) von hinten auf den Spülenträgerring (15) aufschiebbar ist.

FIG. 1

FIG.2

FIG. 3

FIG. 4

| Europäisches Patentamt | **EUROPÄISCHER RECHERCHENBERICHT** | Nummer der Anmeldung |
|---|---|---|

| | **EINSCHLÄGIGE DOKUMENTE** | | | EP 90108852.6 |
|---|---|---|---|---|
| Kategorie | Kennzeichnung des Dokuments mit Angabe, soweit erforderlich, der maßgeblichen Teile | Betrifft Anspruch | | KLASSIFIKATION DER ANMELDUNG (Int Cl.⁵) |
| A | <u>DE – A1 – 3 212 955</u><br>(BENZ)<br> * Gesamt *<br>-- | 1 | | B 65 B 13/10 |
| A | <u>DE – A1 – 3 219 163</u><br>(BENZ)<br> * Gesamt *<br>---- | 1 | | |
| | | | | **RECHERCHIERTE SACHGEBIETE (Int Cl.⁵)** |
| | | | | A 22 C  7/00<br>B 65 B 13/00<br>B 65 B 25/00 |
| | Der vorliegende Recherchenbericht wurde für alle Patentansprüche erstellt. | | | |

| Recherchenort<br>WIEN | Abschlußdatum der Recherche<br>12-09-1990 | Prüfer<br>MELZER |
|---|---|---|